# EUROPEAN PATENT APPLICATION

(11) **EP 3 845 444 A1**
(43) Date of publication of application: **07.07.2021**
(21) Application number: 19851757.5
(22) Date of filing: 21.08.2019
(51) Int. Cl.: B62K 19/30, B62M 3/00, B60B 27/00

(54) **IMPROVED BICYCLE FRAME STRUCTURE**

(30) Priority: 21.08.2018 CN 201810955446
(71) Applicant: Shanghai Kosmo Machinery Co., Ltd., Shanghai 201407 (CN)
(72) Inventor: YU, Xiaoai, Shanghai 201407 (CN)
(74) Representative: IPrime Rentsch Kaelin AG
(86) International application number: PCT/CN2019/101702
(87) International publication number: WO 2020/038385

(57) **Abstract**

The invention discloses an improved bicycle frame structure, which improves riding quality and the internal congestion of a hub, simplifies the hub structure, and reduces the manufacturing difficulty of the hub. The adopted technical scheme is as follows: a rear fork foot and a front fork foot are arranged with internal bearing positions so that a rear wheel carrying bearing and a front wheel bearing are respectively and correspondingly assembled in the respective internal bearing positions, the front fork foot and the front wheel bearing are fixedly connected in a penetrating mode through a front wheel hub fixing pin, a front wheel hub is sleeved on the front wheel hub fixing pin, a corresponding bearing is not required to be arranged in the front wheel hub, the rear fork foot and the rear wheel carrying bearing are fixedly connected in a penetrating mode through a rear wheel hub fixing pin, a rear wheel hub is sleeved on the rear wheel hub fixing pin, a corresponding bearing is not required to be arranged in the rear wheel hub, two ends of a five-way transverse straight-through pipe are respectively arranged with outer bearing positions, crank bearings are sleeved on the outer bearing positions, a crank is sleeved on the outer side of the crank bearing, a main shaft of the crank is arranged to penetrate through the five-way transverse straight-through pipe, and the two cranks are fixedly connected.

## Description

### Technical Field

The invention discloses an improved bicycle frame structure and belongs to the technical field of bicycle accessories.

### Background

Bicycles are more and more popular in our life and are daily travel tools for most people. With the development of the economy, there are more and more types and functions and better comprehensive performance of bicycles. When a bicycle is used, the bicycle is worn and damaged to a certain extent due to various unfavorable factors, so that the bicycle is damaged; moreover, the overall performance of the bicycle remains to be improved due to limitations in the performance of the various components of the bicycle. It is well known that the frame and front fork are the most important components of a bicycle, which largely determine the main indicators of weight, durability, overall rigidity, etc. of the bicycle. The existing bicycle frame and front fork have the problem of unreasonable stress. Firstly, the bearings of the front wheel and the rear wheel of the existing bicycle are installed in a hub, so that the distance between the bearings is not wide enough, and the main shaft in the hub can deform and bend after being loaded, leading to poor rigidity of a wheel set. Besides, the bearing device of the crank of the existing bicycle is arranged in a five-way, so that the size of the main shaft of the crank device is limited by the internal diameter of the bearing and cannot be further enlarged. In addition, because the bearing is arranged in the five-way, the size of the bearing device cannot be further enlarged due to the limitation of the internal diameter of the five-way. In summary, these unreasonable structures weaken the overall rigidity of the bicycle during operation, reduce riding quality, and reduce the endurance of the hub.

### Summary of the Invention

The invention overcomes the defects in the prior art, provides an improved bicycle frame structure, improves riding quality and the internal congestion of a hub, simplifies the hub structure, and reduces the manufacturing difficulty of the hub.

In order to solve the above technical problem, the technical scheme adopted by the invention is as follows: an improved bicycle frame structure comprises a frame, a rear fork foot, a front fork foot and a five-way, the rear fork foot and the front fork foot are fixedly arranged at the rear end and the front end of the frame respectively, the five-way is located at the lower end of the middle part of the frame, the rear fork foot and the front fork foot are both arranged with internal bearing positions so that the rear wheel carrying bearing and the front wheel bearing are respectively and correspondingly assembled in respective internal bearing positions, the front fork foot and the front wheel bearing are fixedly connected in a penetrating mode through a front wheel hub fixing pin, a front wheel hub is sleeved on the front wheel hub fixing pin, a corresponding bearing is not required to be arranged in the front wheel hub, the rear fork foot and the rear wheel carrying bearing are fixedly connected in a penetrating mode through a rear wheel hub fixing pin, a rear wheel hub is sleeved on the rear wheel hub fixing pin, a corresponding bearing is not required to be arranged in the rear wheel hub, two ends of a five-way transverse straight-through pipe are both arranged with outer bearing positions, crank bearings are sleeved on the outer bearing positions, a crank is sleeved on the outer side of the crank bearing, a main shaft of the crank is arranged to penetrate through the five-way transverse straight-through pipe, and the two cranks are fixedly connected.

The front wheel hub fixing pin and the rear wheel hub fixing pin are both composed of a pin shaft arranged with a threaded end and a nut capable of matching with the threaded end of the pin shaft.

Compared with the prior art, the invention has the following beneficial effects.
1. Compared with a bicycle with an ordinary structure, the front wheel bearing and the rear wheel carrying bearing are respectively installed in the front wheel hub and the rear wheel hub, and are also respectively installed on the front wheel main shaft and the rear wheel main shaft. According to the bicycle frame and the front fork of the present invention, the distance between the front wheel bearings and the distance between the rear wheel carrying bearings are both much wider than that of a bicycle with an ordinary structure. The bicycle frame and the front fork structure improve the rigidity of the front wheel and the rear wheel. The durability of the bearing is improved. In addition, the hub of the front wheel and the rear wheel of the present invention does not require an axis inside the hub, and the structure is simpler so that the hub of the front wheel and the rear wheel of the present invention is lower in manufacturing cost.
2. Now for ordinary bicycles, the crank bearing is installed within the five-way and on the main shaft of the crank. It is obvious that the distance between the crank bearings of an ordinary bicycle is relatively narrow, the size of the bearings cannot be further enlarged due to the limitation of the frame five-way, and the size of the axis of the crank cannot be further enlarged as well due to the limitation of the bearings. Therefore, the overall bending resistance performance and torsion resistance performance of the crank are reduced. The crank bearing of the bicycle of the present invention is installed on the outer side of the five-way and in the crank bearing position. Obviously, the distance between the crank bearings of the present invention is wider, the size of the bearings is not limited by the five-way so as to be further enlarged, the size of the axis of the crank is not limited by the bearings so as to be further enlarged, and the bending resistance performance and the torsion resistance performance of the crank are improved.

According to the invention, the structure is reasonable, the integral rigidity during operation is strengthened, the riding quality is improved, and the durability of the hub is improved.

### Brief Description of the Drawings

The present invention will now be described in further detail with reference to the accompanying drawings.
Fig. 1 is a schematic structural view of the present invention.
Fig. 2 is a schematic view showing the assembly of a front fork foot and a front wheel bearing of the present invention.
Fig. 3 is a schematic view showing the assembly of a front wheel bearing and a front wheel hub of the present invention.
Fig. 4 is a schematic structural view showing the assembly of a front wheel bearing and a front wheel hub of the present invention.
Fig. 5 is a schematic view showing the assembly of a rear fork foot and a rear wheel carrying bearing of the present invention.
Fig. 6 is a schematic view showing the assembly of a rear wheel carrying bearing and a rear wheel hub of the present invention.
Fig. 7 is a schematic structural view showing the assembly of a rear wheel carrying bearing and a rear wheel hub of the present invention.
Fig. 8 is a schematic view showing the assembly of a five-way and a crank bearing and a crank of the present invention.
Fig. 9 is a schematic structural view showing the assembly of a five-way and a crank bearing and a crank of the present invention.

In the figures: 1 is a frame, 2 is a rear fork foot, 3 is a front fork foot, 4 is five-way, 5 is a front wheel bearing, 6 is a rear wheel carrying bearing, 7 is a crank bearing, 8 is a front wheel hub, 9 is a rear wheel hub, 10 is a crank, 11 is a front wheel hub fixing pin, and 12 is a rear wheel hub fixing pin.

### Detailed Description of the Preferred Embodiments

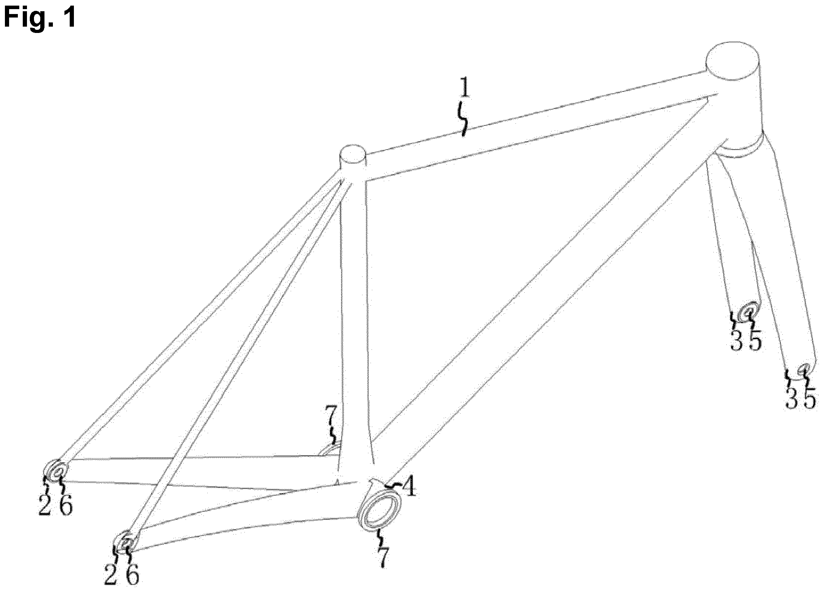

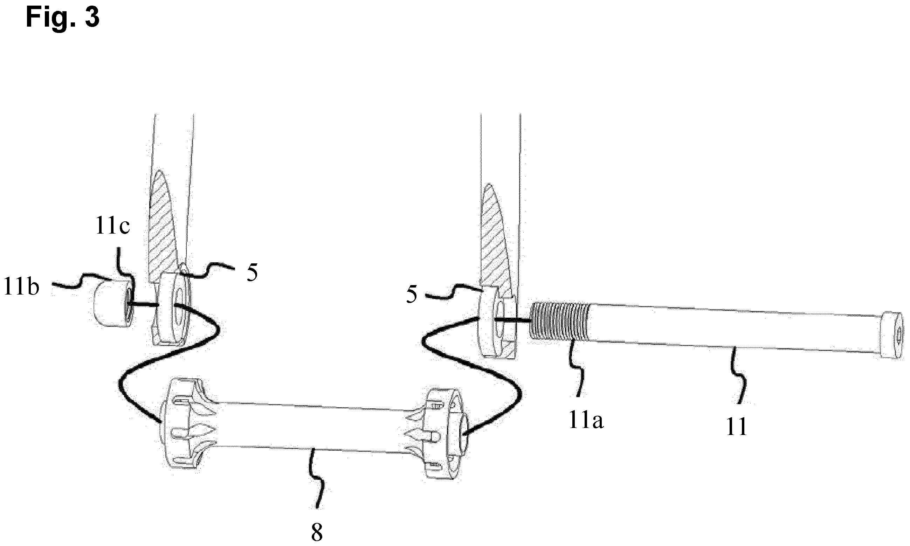

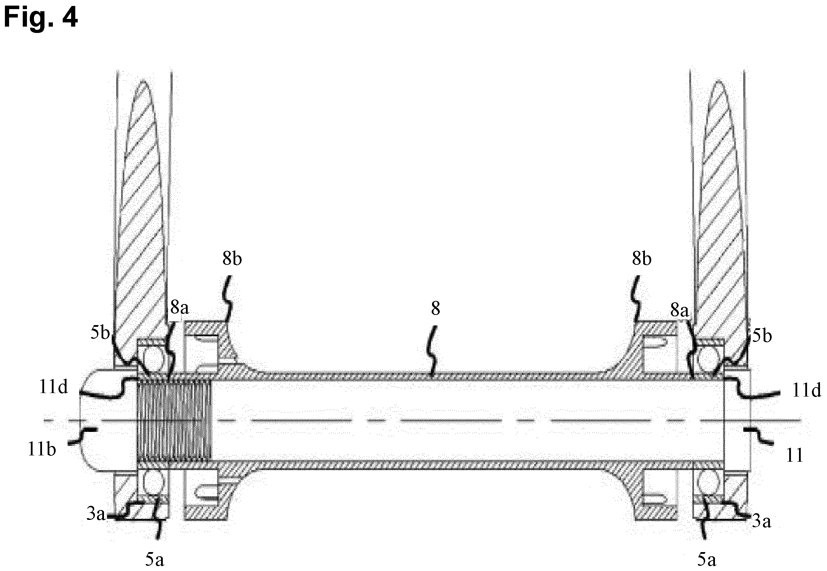

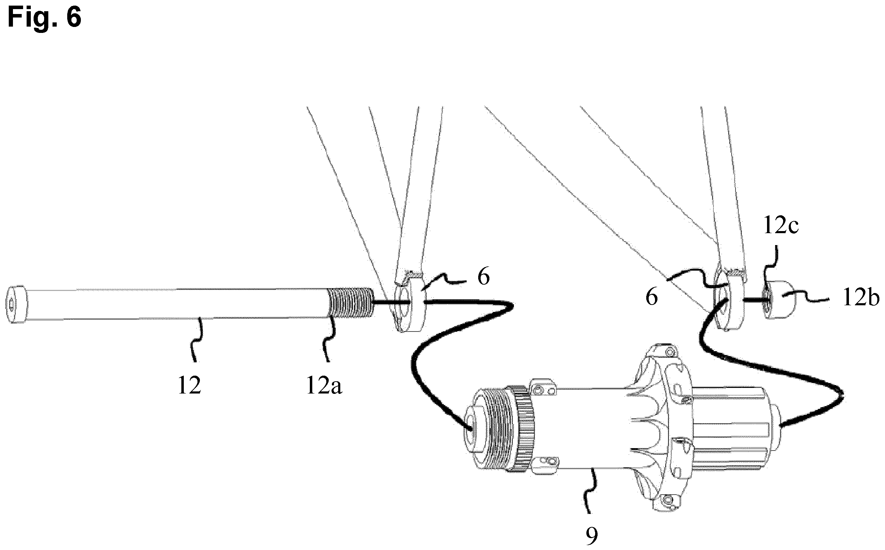

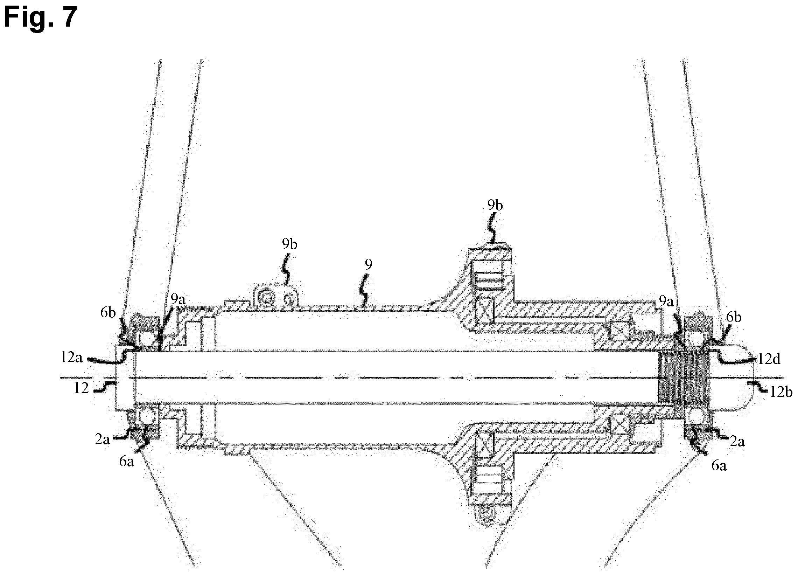

As shown in figures 1-9, an improved bicycle frame structure of the present invention comprises a frame 1, a rear fork foot 2, a front fork foot 3, and a five-way 4. The rear fork foot 2 and the front fork foot 3 are fixedly arranged at the rear end and the front end of the frame 1 respectively; the five-way 4 is located at the lower end of the middle part of the frame 1, and the rear fork foot 2 and the front fork foot 3 are arranged with internal bearing positions so that the rear wheel carrying bearing 6 and the front wheel bearing 5 are correspondingly assembled in respective internal bearing positions; the front fork foot 3 and the front wheel bearing 5 are fixedly connected in a penetrating mode through a front wheel hub fixing pin 11, the front wheel hub fixing pin 11 is sleeved with a front wheel hub 8, a corresponding bearing is not required to be arranged in the front wheel hub 8, the rear fork foot 2 and the rear wheel carrying bearing 6 are fixedly connected in a penetrating mode through a rear wheel hub fixing pin 12, a rear wheel hub 9 is sleeved on the rear wheel hub fixing pin 12, a corresponding bearing is not required to be arranged in the rear wheel hub 9, outer bearing positions are arranged at two ends of a transverse straight-through pipe of the five-way 4, crank bearings 7 are sleeved on the outer bearing positions, a crank 10 is sleeved outside the crank bearing 7, a crank 10 is sleeved on the outer side of the crank bearing 7, a main shaft of the crank 10 is arranged to penetrate through a transverse straight-through pipe of the five-way 4, and two cranks 10 are fixedly connected.

The front wheel hub fixing pin 11 and the rear wheel hub fixing pin 12 are both composed of a pin shaft arranged with a threaded end and a nut capable of matching with the threaded end of the pin shaft.

The present invention will now be described in detail with reference to specific embodiments.

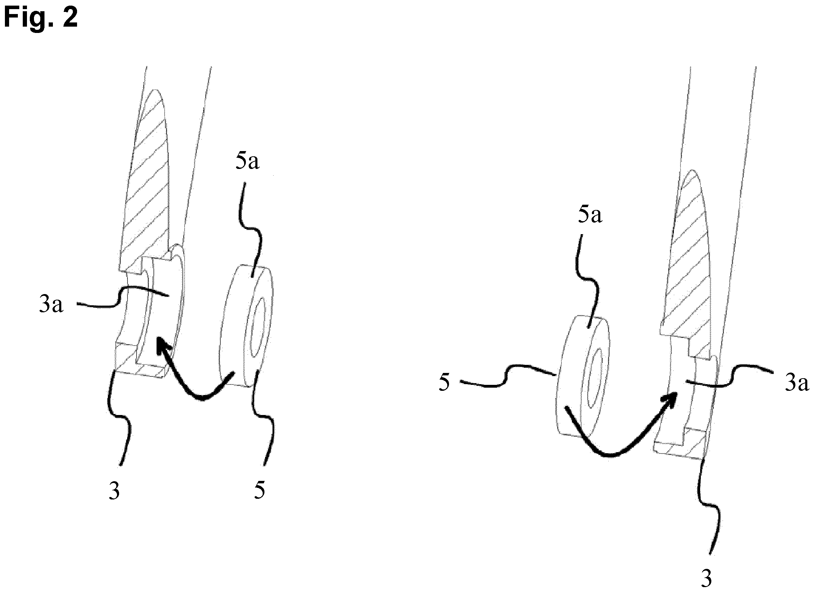

As shown in figures 2-4, the front fork feet 3 have internal bearing positions 3a, outer rings 5a of the front wheel bearings 5 are respectively installed in the internal bearing positions 3a of the front fork feet. Two end faces 8a of the front wheel hub 8 are respectively in contact with the internal side end faces of the internal rings 5b of the front wheel bearings 5. The front wheel hub fixing pin 11 has one threaded end 11a fitting with an internal thread 11c in a threaded cover 11b. The threaded end 11a of the front wheel hub fixing pin 11 penetrates through the front wheel hub 8 and the front wheel bearing 5 and then is screwed with the threaded cover 11 b through the internal thread 11c until the front wheel hub fixing pin 11 and the end face 11d of the threaded cover 11b are respectively contacted with the outer side end face of the internal ring 5b of the front wheel bearing 5 and then gets locked and fixed. When the installation is completed, the front wheel can rotate around the axis of the front wheel.

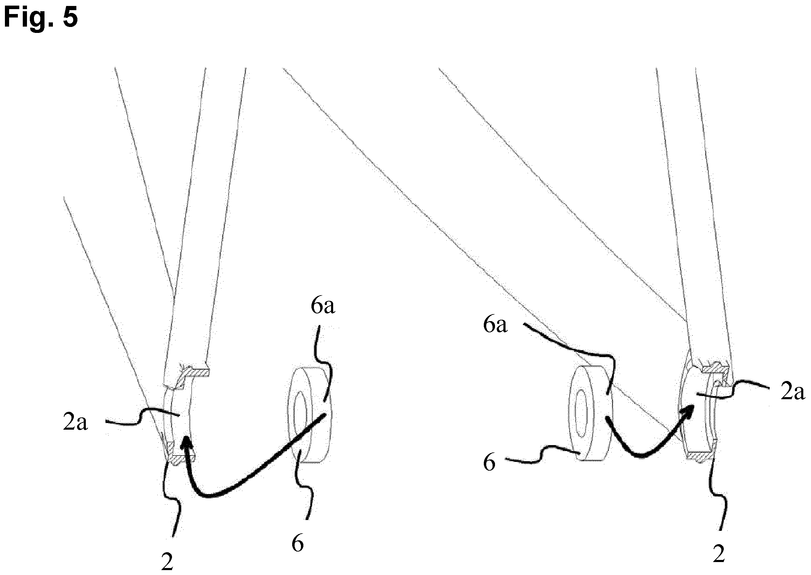

As shown in figures 5-7, the rear fork feet 2 have internal bearing positions 2a, and outer rings 6a of the rear wheel carrying bearings 6 are respectively installed in the internal bearing positions 2a of the rear fork feet. Two end faces 9a of the rear wheel hub 9 are respectively contacted with the internal side end faces of the internal rings 6b of the rear wheel bearing bearings 6. The rear wheel hub fixing pin 12 has one threaded end 12a fitting with an internal thread 12c in the threaded cover 12b. The threaded end 12a of the rear wheel hub fixing pin 12 penetrates through the rear wheel hub 9 and the rear wheel carrying bearing 6 and then is screwed with the threaded cover 12b through the internal thread 12c until the rear wheel hub fixing pin 12 and the end face 12d of the threaded cover 12b are respectively contacted with the outer side end face of the internal ring 6b of the rear wheel carrying bearing 6 and then gets locked and fixed. When the installation is completed, the rear wheel can rotate around the axis of the rear wheel.

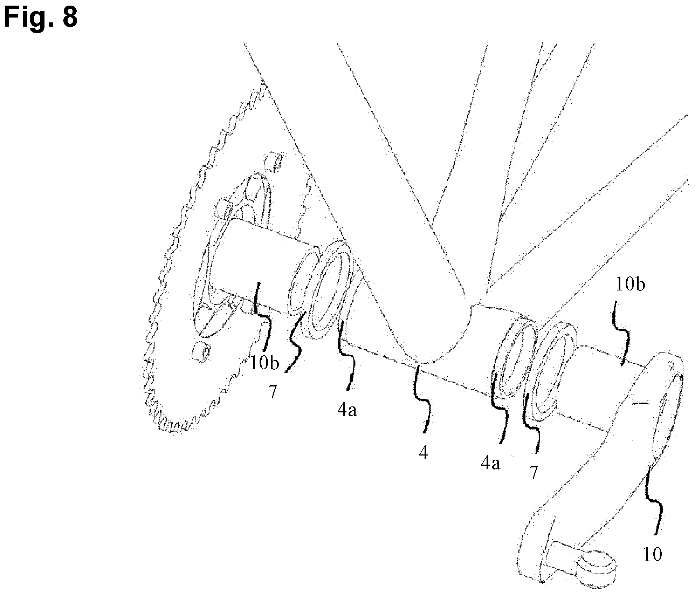

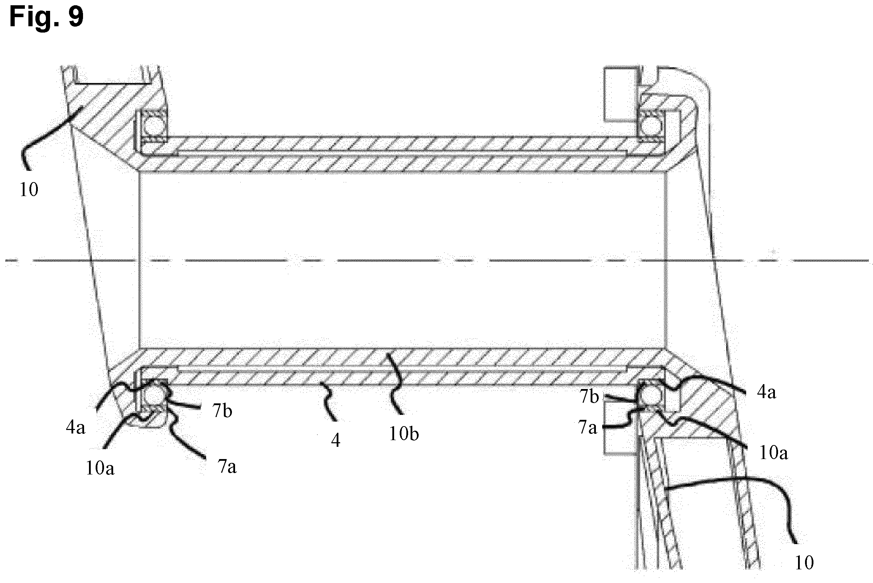

As shown in figures 8 and 9, the frame five-way 4 has an outer bearing position 4a, and the crank 10 has an internal bearing position 10a. The internal ring 7b of the crank bearing 7 is installed on the five-way outer bearing position 4a, and the outer ring 7a of the crank bearing 7 is installed in the crank internal bearing position 10a. After the main shaft 10b of the crank 10 is installed through the five-way, the crank can rotate around the axis of the crank.

Compared with a bicycle with an ordinary structure, the front wheel bearing and the rear wheel carrying bearing are respectively installed in the front wheel hub and the rear wheel hub, and are also respectively installed on the front wheel main shaft and the rear wheel main shaft. According to the bicycle frame and the front fork of the present invention, the distance between the front wheel bearings and the distance between the rear wheel carrying bearings are both much wider than that of a bicycle with an ordinary structure. The bicycle frame and the front fork structure improve the rigidity of the front wheel and the rear wheel. The durability of the bearing is improved. In addition, the hub of the front wheel and the rear wheel of the present invention does not require an axis inside the hub, and the structure is simpler so that the hub of the front wheel and the rear wheel of the present invention is lower in manufacturing cost.

Now for ordinary bicycles, the crank bearing is installed within the five-way and on the main shaft of the crank. It is obvious that the distance between the crank bearings of an ordinary bicycle is relatively narrow, the size of the bearings cannot be further enlarged due to the limitation of the frame five-way, and the size of the axis of the crank cannot be further enlarged as well due to the limitation of the bearings. Therefore, the overall bending resistance performance and torsion resistance performance of the crank are reduced. The crank bearing of the bicycle of the present invention is installed on the outer side of the five-way and in the crank bearing position. Obviously, the distance between the crank bearings of the present invention is wider, the size of the bearings is not limited by the five-way so as to be further enlarged, the size of the axis of the crank is not limited by the bearings so as to be further enlarged, and the bending resistance performance and the torsion resistance performance of the crank are improved.

While embodiments of the present invention have been described in detail with reference to the accompanying drawings, the present invention is not limited to the above-described embodiments, and various changes may be made within the knowledge of one of ordinary skills in the art without departing from the spirit of the present invention.

## Claims

1. An improved bicycle frame structure, comprising a frame (1), a rear fork foot (2), a front fork foot (3) and a five-way (4), wherein, the rear fork foot (2) and the front fork foot (3) are fixedly arranged at a rear end and a front end of the frame (1) respectively and the five-way (4) is located at a lower end of a middle part of the frame (1), **characterized in that** the rear fork foot (2) and the front fork foot (3) are both arranged with internal bearing positions so that rear wheel carrying bearing (6) and front wheel bearing (5) are respectively and correspondingly assembled in respective internal bearing positions, the front fork foot (3) and the front wheel bearing (5) are fixedly connected in a penetrating mode through a front wheel hub fixing pin (11), a front wheel hub (8) is sleeved on the front wheel hub fixing pin (11), a corresponding bearing is not required to be arranged in the front wheel hub (8), the rear fork foot (2) and the rear wheel carrying bearing (6) are fixedly connected in a penetrating mode through a rear wheel hub fixing pin (12), a rear wheel hub (9) is sleeved on the rear wheel hub fixing pin (12), a corresponding bearing is not required to be arranged in the rear wheel hub (9), two ends of a five-way (4) transverse straight-through pipe are respectively arranged with outer bearing positions, crank bearings (7) are sleeved on the outer bearing positions, a crank (10) is sleeved on an outer side of the crank bearing (7), a main shaft of the crank (10) is arranged to penetrate through the five-way (4) transverse straight-through pipe, and the two cranks (10) are fixedly connected. 2. The improved bicycle frame structure according to claim 1, **characterized in that** the front wheel hub fixing pin (11) and the rear wheel hub fixing pin (12) are both composed of a pin shaft arranged with a threaded end and a nut capable of matching with the threaded end of the pin shaft.
